# EUROPÄISCHE PATENTSCHRIFT

(11) **EP 2 416 985 B1**
(45) Veröffentlichungstag und Bekanntmachung des Hinweises auf die Patenterteilung: **03.03.2021**
(21) Anmeldenummer: 10713839.8
(22) Anmeldetag: 08.04.2010
(51) Int. Cl.: B60N 2/36, B60N 2/90, B60N 2/02

(54) **VERRIEGELUNGSVORRICHTUNG FÜR EINEN FAHRZEUGSITZ**
LOCKING MECHANISM FOR A VEHICLE SEAT
DISPOSITIF DE VERROUILLAGE POUR SIÈGE DE VÉHICULE

(30) Priorität: 09.04.2009 DE 102009017627
(43) Veröffentlichungstag der Anmeldung: 15.02.2012
(73) Patentinhaber: Adient Luxembourg Holding S.à r.l., 1855 Luxembourg (LU)
(72) Erfinder: HEEG, Norbert, 66994 Dahn (DE); DIEHL, Andreas, 67697 Otterberg (DE); MÜLLER, Peter, 67686 Mackenbach (DE)
(74) Vertreter: Liedhegener, Ralf
(86) Internationale Anmeldenummer: PCT/EP2010/002198
(87) Internationale Veröffentlichungsnummer: WO 2010/115626

(56) Entgegenhaltungen:
- EP-A2- 0 854 063
- WO-A1-03/039905
- DE-A1- 19 841 309
- DE-B3-102004 056 086

## Beschreibung

Die Erfindung betrifft eine Verriegelungsvorrichtung für einen Fahrzeugsitz, insbesondere für einen Kraftfahrzeugsitz, mit einem Verriegelungsmechanismus zum mechanischen Verriegeln einer beweglichen Klinke des Verriegelungsmechanismus mit einem Gegenelement, sowie mit einer Aktuatoreinrichtung zur Betätigung der Klinke mittels eines Antriebs, und mit einem Gehäuse in dem der Verriegelungsmechanismus angeordnet und gelagert ist.

Insbesondere Ver- und Entriegelungskomponenten für Rücksitzanlagen weisen oftmals einen manuell betätigbaren Ver- und Entriegelungsmechanismus auf, mit dem eine Verriegelung einer Rücksitzlehne der Rücksitzanlage mit einer Fahrzeugstruktur erzeugt und gelöst werden kann. Zur Erhöhung des Komforts werden derartige Rücksitzanlagen immer öfter mit einem elektrisch angetriebenen Aktuator versehen, mit dem eine Entriegelung der Verriegelungsmechanismus auch motorisch ausgelöst werden kann. Hierbei werden in der Regel bereits existierende, rein mechanische Verriegelungskomponenten zusätzlich mit einer elektrischen Betätigung versehen. Mittels Übertragungselementen, wie Winkel, Hebel, Gestänge, Getriebe und dergleichen, die auch auf der Adapterplatte befestigt sind, erfolgt eine Koppelung zwischen dem Aktuator und dem Verriegelungsmechanismus zur Übertragung der Antriebsbewegung des Aktuators auf den Verriegelungsmechanismus.

Rücksitzlehnen der zweiten oder dritten Sitzreihe sind in der Regel umlegbar, um ein höheres Ladevolumen zu ermöglichen. Dazu können die Rücksitzlehnen aus der Fahrzeugstruktur entriegelt und nach vorne umgelegt werden. Die Rückstellung erfolgt in der Regel in der Art, dass der Insasse die Lehne manuell aufrichtet und mit einem bestimmten Kraftaufwand die Verriegelung der Lehne in der Fahrzeugstruktur vollführt. Der erforderliche Kraftaufwand ist notwendig, um die Polsterpressung und die Verstellkräfte der Klinken innerhalb der Verriegelungsvorrichtung zu überwinden.

Die erfolgte Verriegelung der Lehne mit der Fahrzeugstruktur wird derzeitig durch einen Indikator angezeigt. Der Indikator ist mit der Verriegelungsvorrichtung derart mechanisch gekoppelt, dass dieser den Zustand der Verriegelungsvorrichtung dem Insassen in Abhängigkeit der Stellung eines für die Verriegelung zuständigen mechanischen Elements der Verriegelungsvorrichtung anzeigt. Bei derartigen Rücksitzlehnen ist es jedoch aus unterschiedlichen Umständen möglich, dass trotzdem keine korrekte Verriegelung erfolgt, beispielsweise aus Unachtsamkeit des Benutzers. Die Rücksitzanlage ist in diesem Fall trotzdem nicht verriegelt, jedoch einsitzbar. Im Falle eines Unfalls (Frontalaufprall) kann es dann passieren, dass die Rücksitzlehne als Trennung des Fahrgastraumes zum Kofferraum die Anforderung "Schutz vor Ladung" nicht erfüllen kann. Dadurch sind die Insassen im Fahrgastraum unter Umständen erheblich gefährdet, schwere Verletzungen der Insassen können dann die Folge sein.

Aus der EP 0 854 063 A2 ist eine Vorrichtung zum Verriegeln von geteilt klappbaren Rückenlehnen an Kraftfahrzeugrücksitzen mit einem Rastbolzen bekannt, durch den jeweils zwei Rückenlehnenteile miteinander verriegelbar sind und der durch eine in Abhängigkeit von Steuersignalen aktivierbare Betätigungseinrichtung mittels einer linearen Bewegung in seine oder aus seiner Verriegelungsstellung bewegbar ist.

Aus der WO 03/039905 A1 ist ein elektrisch umklappbarer Sitz zum Einbau in ein Fahrzeug bekannt, der Sitz umfasst ein an dem Fahrzeug montierbares Sitzkissen, eine mit dem Sitzkissen schwenkbar verbundene Sitzlehne und ein in der Sitzlehne angeordneter Aktuator zum automatischen Drehen der Sitzlehne zwischen einer aufrechten Position und einer umgeklappten Position.

Aus der DE 198 41 309 A1 ist ein Schloss für Klappen oder Türen von Fahrzeugen, insbesondere Handschuhfachschloss, bekannt, mit einem Drehriegel, in welchen beim Schließen der Klappe ein Schließteil einfährt und den Drehriegel aus einer die Offenlage der Klappe kennzeichnenden Aufschwenkposition über eine Spaltlage der Klappe in eine die Schließlage der Klappe bestimmende Zuschwenkposition dreht, mit einer Sperrklinke, die in eine drehfest mit dem Drehriegel verbundene Drehfalle einrastet, wenn die aus dem Drehriegel und der Drehfalle bestehende Dreheinheit aus ihrer Aufschwenkposition in eine Zuschwenkposition überführt werden wird, und mit einem ein Abtriebsglied aufweisenden Getriebe, das von einem Motor angetrieben wird, wobei der Motor als Schließhilfe für den Drehriegel dient.

Der Erfindung liegt deshalb die Aufgabe zugrunde, eine Verriegelungsvorrichtung der eingangs genannten Art zu schaffen, mit der eine bessere Sicherheit gegen Verletzungen von Fahrzeuginsassen möglich wird, die nicht verriegelte Rücksitzlehnen als Ursache haben.

Diese Aufgabe wird durch eine Verriegelungsvorrichtung nach Anspruch 1 gelöst. Es existieren zwar bereits Verriegelungsvorrichtungen mit motorischem Antrieb. Diese werden jedoch ausschließlich zur Entriegelung der Klinke von ihrem Gegenelement, üblicherweise einem Bolzen, benutzt. Im Rahmen der Erfindung hat sich nun gezeigt, dass eine motorisch erzeugte Verriegelungsbewegung der Klinke zu einer größeren Sicherheit dahingehend beitragen kann, dass eine beabsichtige Verriegelung tatsächlich erfolgt ist. Falls die Verriegelungsvorrichtung eine motorische Aktuatoreinrichtung zur motorischen Entriegelung der Klinke aufweist kann grundsätzlich die Verriegelung mit der gleichen Aktuatoreinrichtung erfolgen, mit der auch die motorische Antriebsbewegung für die Entriegelung erzeugt wird. In einer bevorzugten Ausführungsform der Erfindung kann jedoch zur Erzeugung einer Antriebsbewegung für eine Verriegelung der Verriegelungsvorrichtung eine separate und insbesondere nur der Verriegelungsfunktion zugeordnete Aktuatoreinrichtung vorgesehen sein.

In einer bevorzugten Ausführungsform der Erfindung kann eine Sensoreinrichtung vorgesehen sein, mit der eine verriegelbare Position der Lehne der Sitzanlage detektierbar ist. In Abhängigkeit einer Positionserkennung der Lehne kann eine Aktivierung der von der Aktuatoreinrichtung erzeugten motorischen Antriebsbewegung erfolgen. Hierzu kann ein entsprechendes Signal der Sensoreinrichtung genutzt werden, das bei Erkennung einer bestimmten Lehnenposition und/oder einer bestimmten Relativposition zwischen der Klinke und ihrem Gegenbolzen ein entsprechendes Signal erzeugt, das einer Steuerung zugeführt wird, die daraufhin die Aktuatoreinheit auslöst, um dadurch die Verriegelung der Klinke der Verriegelungsvorrichtung mit dem Gegenelement durchzuführen.

Zur weiteren Erhöhung der Sicherheit für eine Verriegelungserzeugung kann in einer weiteren bevorzugten Ausführungsform der Erfindung die Sensoreinrichtung auch Mittel umfassen, mit denen (Relativ-)Positionen von Komponenten der Verriegelungsvorrichtung während der Verriegelung sensorisch erfaßt und kontrolliert werden. Erreichen die Komponenten ihre jeweilige Endposition so kann dies mit einem entsprechenden Signal der Sensoreinrichtung der Steuerung oder einer sonstigen Auswerteeinrichtung signalisiert werden. Die Steuerung interpretiert diese Signale und kann bei Erreichen von Endpositionen der überwachten Komponenten, was einer erfolgten Verriegelung zwischen der Klinke und ihrem Gegenelement entspricht, die Aktuatoreinrichtung abschalten. Außerdem können Mittel insbesondere zur optischen Anzeige der erfolgten Verriegelung vorgesehen sein.

In einer weiteren bevorzugten Ausgestaltung der Erfindung, kann eine optische Anzeige für den durch die Sensoreinrichtung ermittelten Verriegelungszustand der Verriegelungsvorrichtung vorgesehen sein. Hierdurch ist eine optische Kontrolle des Verriegelungszustands möglich, wodurch die Sicherheit weiter erhöht werden kann. Die optische Anzeige kann an der Verriegelungsvorrichtung selbst oder in deren Nähe angebracht sein. Ebenso ist es möglich, den Verriegelungszustand an einer Instrumententafel des Fahrzeugs optisch und/oder akustisch anzuzeigen, insbesondere eine nicht erfolgte Verriegelung in Form eines Warnsignals. Hierzu kann eine Aufbereitung des Signals der Sensoreinrichtung durch die Steuerung erfolgen.

Es sollte zweckmäßigerweise zumindest ein Sicherungselement vorhanden sein, mit dem die Klinke in ihrer Verriegelungsposition gegen ein unbeabsichtigtes Öffnen gesichert werden kann. Dies ermöglicht einen besonders funktionssicheren Verriegelungsmechanismus auszubilden. Zudem erleichtert eine solche konstruktive Lösung auch die Aktuatoreinrichtung außerhalb eines Kraftflusses anzuordnen, der im Crashfall auf den Verriegelungsmechanismus wirkt. Die Aktuatoreinrichtung selbst muss somit nicht zwingend auf Crashbelastungen ausgelegt werden.

In weiteren bevorzugten Ausführungsformen der Erfindung kann die Aktuatoreinrichtung mit einem Getriebe, insbesondere mit einem Spindelgetriebe versehen sein, mit dem eine Untersetzung der motorischen Antriebsbewegung der Aktuatoreinrichtung erzeugbar ist. Ein Spindelgetriebe ist eine von mehreren Möglichkeiten, um eine rotative Antriebsbewegung des Motors in eine zumindest im Wesentlichen translatorische Bewegung umzusetzen. Mittels einer solchen bevorzugten geradlinigen Bewegung kann die Aktuatoreinrichtung auf den Verriegelungsmechanismus einwirken, um eine verriegelnde Schwenkbewegung der Klinke des Verriegelungsmechanismus mit dem Gegenelement zu erreichen. Vorzugsweise kann hierbei ein Anschlag der Aktuatoreinrichtung auf einen mit Abstand zu einer Drehachse der Klinke angeordneten Mitnehmer der Klinke einwirken, um hierdurch eine Schwenkbewegung der Klinke zu erreichen.

Um eine noch größere Untersetzung zu erzielen und damit das Drehmoment weiter zu erhöhen kann zusätzlich ein zweites Getriebe vorgesehen sein, insbesondere ein dem Spindelgetriebe vorgeschaltetes Planetengetriebe. Mit Vorteil können abtriebsseitig das Planetengetriebe und der Elektromotor der Aktuatoreinrichtung identisch ausgebildet sein, beispielsweise in Form identischer Zahnräder. Damit ist es auf besonders einfache Weise möglich ein System von Verriegelungsvorrichtungen zu bilden, indem beispielsweise in Abhängigkeit davon, welches Drehmoment benötigt wird, unterschiedliche Getriebe bzw. unterschiedliche Anzahl von Getrieben vorgesehen sein können. Des Weiteren können hierdurch auch unterschiedliche Elektromotoren auf einfache Weise in das baukastenartige System integriert werden.

Die Aktuatoreinrichtung führt zur Erzielung der Verriegelung eine Hubbewegung aus. Um ein oder mehrere die Hubbewegung der Aktuatoreinrichtung ausführende Elemente nach erfolgter Verriegelung wieder in eine Position zurückzustellen, die diese vor der Verriegelung eingenommen haben, kann die Verriegelungsvorrichtung mit einem Rückstellelement versehen sein. Das Rückstellelement kann hierbei als Energiespeicher ausgebildet sein, insbesondere als Energiespeicher, der durch die Antriebsbewegung bei der Verriegelung mit Energie aufladbar ist. Die gespeicherte Energie kann dann nachfolgend zur Rückstellung der Aktuatoreinrichtung freigegeben und genutzt werden. In einer günstigen Ausführungsform der Erfindung kann das Rückstellelement ein Federelement sein. Mit Vorteil bringt das Rückstellelement im Bereich des Getriebes der Aktuatoreinrichtung die gespeicherte Energie in die Aktuatoreinrichtung zu deren Rückstellung ein.

Eine weitere bevorzugte Verriegelungsvorrichtung kann durch eine Sensoreinrichtung gekennzeichnet sein, die mit Mittel zur Detektierung von positionsabhängigen Lagen versehen ist, wobei die Verriegelungsvorrichtung Mittel aufweist, mit denen von der Sensoreinrichtung generierte positionsabhängige Signale zur Betätigung der Aktuatoreinrichtung nutzbar sind. Es kann hierbei bevorzugt sein, wenn die Verriegelungsvorrichtung zudem Anzeigemittel aufweist, mittels denen eine von den Detektionsmitteln erkannte Verriegelungsendlage anzeigbar ist.

Eine hierzu günstige Weiterbildung der Verriegelungsvorrichtung kann schließlich auch durch Mittel zur Zuführung von Signalen der Detektionsmittel zu einer Steuerung der Aktuatoreinrichtung gekennzeichnet sein.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: einen Ausschnitt eines Rücksitzes eines Kraftfahrzeugs mit einer erfindungsgemäßen Verriegelungsvorrichtung und einem an einer Fahrzeugstruktur befestigten Gegenelement;
- Fig. 2: die Verriegelungsvorrichtung aus Fig. 1 in einer perspektivischen Darstellung;
- Fig. 3: eine Teildarstellung des Verriegelungsmechanismus aus Fig. 2 in einer entriegelten Position;
- Fig. 4: eine Teildarstellung des Verriegelungsmechanismus aus Fig. 2 in einer verriegelten Position;
- Fig. 5: die erfindungsgemäße Verriegelungsvorrichtung aus Fig. 1 zusammen mit einer Steuerung.

In den Figuren ist ein Ausführungsbeispiel für eine erfindungsgemäße Verriegelungsvorrichtung 1 gezeigt, wie Sie beispielsweise in einer schwenkbar angelenkten Lehne 2 einer Rücksitzanlage 3 integriert sein kann. Mit einer solchen Verriegelungsvorrichtung 1 kann eine aufrechte Position der Lehne 2 durch Zusammenwirken der Verriegelungsvorrichtung 1 mit einem Gegenelement B arretiert bzw. gesichert werden. Mittels einer nicht näher dargestellten Möglichkeit zur Betätigung der Verriegelungsvorrichtung 1 ist diese Arretierung lösbar, beispielsweise um die Rücksitzlehne 2 in Richtung auf eine nicht dargestellte Sitzfläche der Rücksitzanlage 3 abzuklappen. Die Verriegelungsvorrichtung 1 kann hierbei in die Rücksitzlehne 2 integriert sein und das Gegenelement B, beispielsweise ein Bolzen, an der Fahrzeugstruktur 4 fahrzeug- bzw. ortsfest angeordnet sein. Prinzipiell ist es jedoch auch möglich das Gegenelement B an der Rücksitzlehne 2 und die Verriegelungsvorrichtung 1 an der Fahrzeugstruktur 4 vorzusehen. Bei Schwenkbewegungen der Lehne 2 nähern sich das Gegenelement B und ein Verriegelungsmechanismus 23 der Verriegelungsvorrichtung an bzw. entfernen sich voneinander.

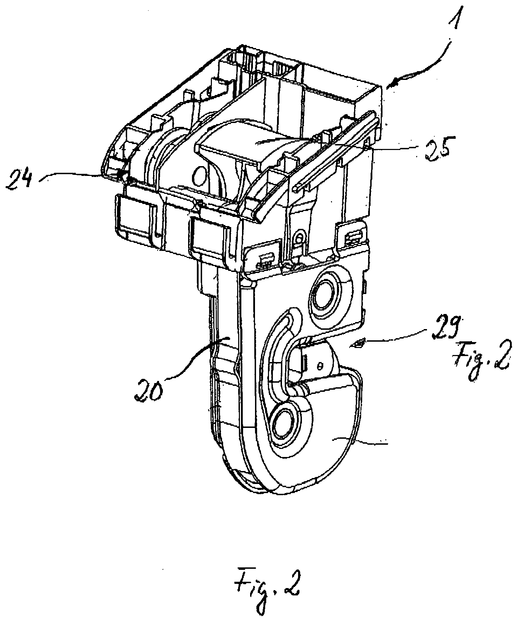

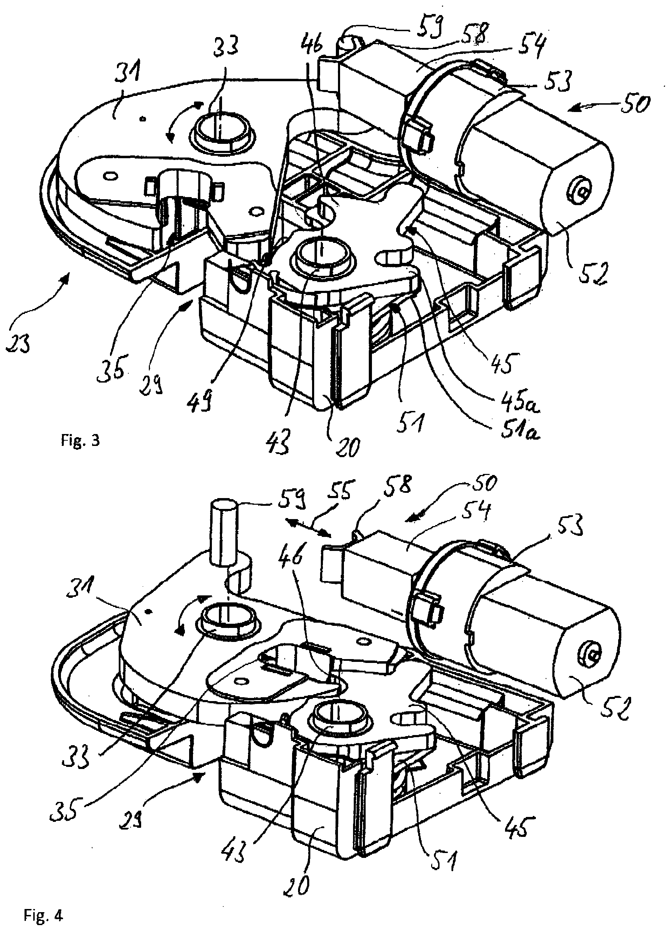

Die Verriegelungsvorrichtung 1 ist mit einem mehrteiligen Gehäuse 20 versehen (Fig. 2). In letzterem ist ein an sich bekannter Verriegelungsmechanismus 23 (vgl. Fig. 3) sowie eine erste im Detail nicht näher dargestellte Aktuatoreinheit 24 (Fig. 2) für eine elektrisch erzeugte Antriebsbewegung des Verriegelungsmechanismus zu dessen Entriegelung angeordnet und am Gehäuse 20 gelagert. Zusätzlich zur automatisierten Antriebsbewegung kann der Verriegelungsmechanismus 23 auch manuell unter Zuhilfenahme eines schwenkbar angelenkten Bediengriffs 25 (Fig. 2) betätigt werden, um damit eine Arretierung zwischen dem Verriegelungsmechanismus 23 und dem Gegenelement B aufzuheben. Es sind auch Ausführungsformen möglich, bei denen kein Bediengriff 25 vorgesehen ist und die Entriegelung stets mit der Aktuatoreinheit 24 erfolgt. Der Verriegelungsmechanismus 23 kann in Bezug auf seine mechanischen Komponenten, deren Anlenkung und Interaktionen miteinander in an sich bekannter Weise aufgebaut sein. Prinzipien derartiger Verriegelungsmechanismen sind beispielsweise in der DE 10 2004 056 086 B3, DE 103 04 574 B4 und DE 103 05 177 A1 offenbart. Auf den Aufbau des Verriegelungsmechanismus wird daher nachfolgend nur rudimentär eingegangen.

Wie in den Fig. 3 und 4 dargestellt ist, ist eine Klinke 31 des Verriegelungsmechanismus 23 auf einem ersten Lagerbolzen 33 schwenkbar gelagert, der wiederum fest an und zwischen zwei Gehäuseschalen und damit am Gehäuse 20 angebracht ist. Die Klinke 31 könnte jedoch auch in anderer Weise beweglich gelagert sein. Die Klinke 31 weist zum Zusammenwirken mit dem Gegenelement B ein nutenförmiges Hakenmaul 35 auf, welches in einem verriegelten Zustand der Verriegelungsvorrichtung 1 eine Aufnahme 29 zumindest näherungsweise senkrecht kreuzt und das Gegenelement B von drei Seiten umschließt, während es sich in einem geöffneten Zustand schräg zur Aufnahme 29 hin öffnet. Ein zweiter Lagerbolzen 43 ist parallel zum ersten Lagerbolzen 33 angeordnet und auf gleiche Weise wie dieser am Gehäuse angebracht. Auf dem zweiten Lagerbolzen 43 ist als erstes Sicherungselement ein Fangexzenter 45 schwenkbar gelagert, welcher durch eine zwischen Gehäuse und Fangexzenter 45 wirkende, nicht näher dargestellte Feder zur Klinke 31 hin vorgespannt ist. Der Spannexzenter 51 ist als zweites Sicherungselement neben dem Fangexzenter 45 und ebenfalls schwenkbar auf dem zweiten Lagerbolzen 43 gelagert. Im verriegelten Zustand sind sowohl der Fangexzenter 45 als auch der Spannexzenter 51 in die Klinke eingefallen, wie dies in Fig. 4 dargestellt ist. Der Spannexzenter 51 übt hierbei mittels einer exzentrisch zum zweiten Lagerbolzen 43 gekrümmten Spannfläche 49 ein schließendes Moment auf die Klinke 31 aus.

Zudem verschließt der Fangexzenter 45 in seiner Verschlussstellung das einseitig offene Hakenmaul 35 mit einem Schließfortsatz 46. Der Fangexzenter 45 weist hierzu eine Fangfläche auf, welche sich in Nachbarschaft zur Spannfläche 49 des Spannexzenters 51 befindet, jedoch im verriegelten Zustand nicht zwingend in Kontakt mit der Klinke 31 sein muss. Die Fangfläche des Fangexzenters 45 kann als eine zentrisch um den zweiten Lagerbolzen 43 gekrümmte Fläche ausgebildet sein. Der Fangexzenter 45 dient als Sicherung gegen ungewolltes Öffnen aus dem verriegelten Zustand. Im Crashfall, wenn die Klinke 31 eventuell ein öffnendes Moment erfährt und den Spannexzenter 51 wegdrückt, gelangt die Fangfläche des Fangexzenters 45 in Anlage an die Klinke 31, ohne dass die Klinke 31 ein Moment auf den Fangexzenter 45 ausüben kann. Der Fangexzenter 45 dient daher sowohl zur Abstützung der Klinke 31 und zur Verhinderung des Öffnens derselben als auch zur Lastaufnahme im Crashfall. Der beispielsweise mit einer nicht dargestellten Feder zur Klinke 31 hin vorgespannte Spannexzenter 51 übernimmt in der verriegelten Position die Funktion, dass er auf die Klinke 31 ein schließendes Moment ausübt, wodurch eine Spielfreistellung sowie ein Toleranzausgleich zur Fahrzeugkarosserie realisiert wird. Der Spannexzenter 51 weist hierzu eine zum Lagerbolzen 43 exzentrisch gekrümmte Spannfläche auf, mit der der Spannexzenter gegen die Klinke 31 anliegt. Beide Sicherungselemente, der Fangexzenter 45 als auch der Spannexzenter 51, sichern somit den verriegelten Zustand die Klinke 31.

Sowohl vom Fangexzenter 45 als auch vom Spannexzenter 51 steht jeweils ein an den jeweiligen Exzenter angeformter Arm in Form eines Entriegelungshebels 45a, 51a zum Entriegeln der Verriegelungsvorrichtung 1 ab. Durch Bewegen von zumindest einem dieser Entriegelungshebel 45a, 51a - in der Darstellung von Fig. 3 und 4 -, vom verriegelten Zustand aus im Uhrzeigersinn, beispielsweise mittels eines Bowdenzugs, schwenkt der Fangexzenter 45 und damit die Fangfläche von der Klinke 31 weg. Beispielsweise mittels eines nicht näher dargestellten Mitnehmers nimmt der Fangexzenter 45, gegebenenfalls nach einem kurzen Leerhub, den Spannexzenter 51 mit, und zieht mittels einer nicht dargestellten Zugfeder die Klinke 31 auf, so dass diese das Gegenelement B freigibt. Durch geeignete geometrische Verhältnisse üben der Fangexzenter 45 und/oder der Spannexzenter 51 in den Stellungen, die sie nach den Bewegungen relativ zur Klinke 31 eingenommen haben, ein öffnendes Moment auf die Klinke 31 aus oder halten diese anderweitig geöffnet. In dieser Position kann nun durch eine Schwenkbewegung der Rücksitzlehne das Gegenelement B durch die Relativbewegung der Verriegelungsvorrichtung 1 in Bezug auf das Gegenelement B aus dem Hakenmaul 35 herausgeführt und damit die Verriegelung vollständig aufgehoben werden.

Wie in Fig. 3 und 4 gezeigt ist, weist die Verriegelungsvorrichtung 1 eine ausschließlich der Klinke 31 zu deren Verriegelung zugeordnete Aktuatoreinrichtung 50 auf, die am Gehäuse 20 befestigt ist. In Wirkrichtung der Aktuatoreinrichtung 50 ist diese mit einem Gleichstromelektromotor 52 versehen, der abtriebsseitig mit einem optional vorgesehenen Planetengetriebe 53 wirkverbunden ist. In anderen Ausführungsformen der Erfindung kann ein anderer Getriebetyp vorgesehen sein oder das Getriebe entfallen. Ebenso könnte als Antrieb der Aktuatoreinrichtung 50 ein Motor vorgesehen sein, der außer der Aktuatoreinrichtung 50 auch Antriebsbewegungen für andere Komponenten liefert. Das Planetengetriebe 53 wiederum ist abtriebsseitig mit einem Spindelgetriebe 54 wirkverbunden, das in an sich bekannter Weise eine eingangsseitige rotative Bewegung in eine abtriebsseitige geradlinige Bewegung umsetzt. Ein solches Spindelgetriebe weist hierzu eine mit einem Gewinde versehene Spindel und eine auf dem Gewinde angeordnete, vom Planetengetriebe angetriebene Spindelmutter auf. Mit dieser geradlinigen Bewegung der Spindel wird ein an der Spindel angeordneter gabelförmiger Anschlag 58 gemäß dem Pfeil 55 geradlinig zwischen zwei Endbereichen hin und her bewegt. Bei der motorisch erzeugten Vorwärtsbewegung stößt der Anschlag 58 auf einen stiftförmigen Mitnehmer 59, der an der Klinke 31 mit Abstand zu der durch den Lagerbolzen 33 definierten Rotationsachse der Klinke 31 angeordnet ist. Der Anschlag 58 nimmt bei seiner Hubbewegung den Mitnehmer zwischen seiner Gabeln auf und mit, wodurch eine Drehbewegung der Klinke 31 um die Rotationsachse des Lagerbolzens 33 aufgrund einer unmittelbar von der Aktuatoreinrichtung 50 auf die Klinke 31 wirkende Bewegung erzeugt wird. In der Darstellung von Fig. 3 erfolgt diese Drehbewegung in Gegenuhrzeigerrichtung. Bei dieser aufgrund des Hubs des Anschlags 58 ausgeführten Drehbewegung erfasst die Klinke 31 den Bolzen B und verriegelt mit diesem.

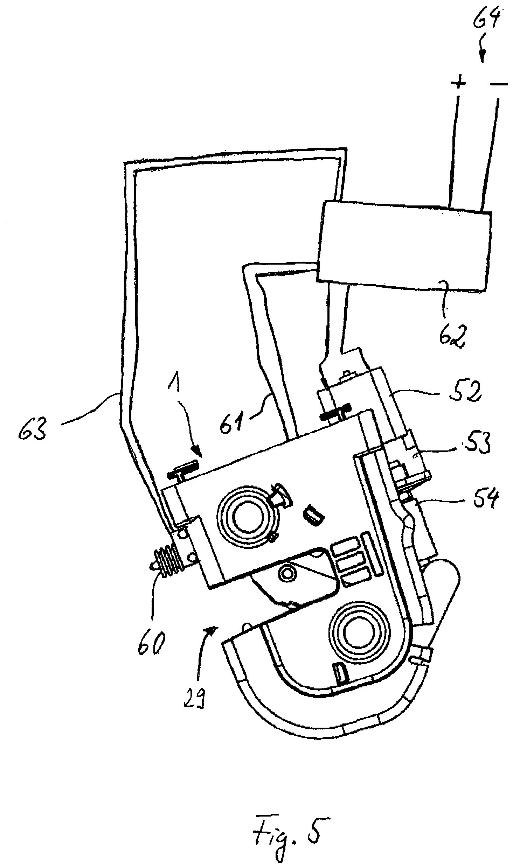

Während dieses Vorgangs kann die Position von einer oder von mehreren Komponenten des Verriegelungsmechanismus mittels eines oder mehreren Sensoren auf Erreichen ihrer Endlage überwacht und bei Erreichen der Endlage ein entsprechendes Signal erzeugt werden. In der gezeigten Ausführungsform wird nur die Position des Fangexzenters 45 sensorisch ermittelt. Das zumindest eine Signal wird einer elektronischen Steuerung 62 zugeführt. Die Steuerung 62 interpretiert dieses Signal und schaltet den Motor 52 der Aktuatoreinrichtung 50 bei Vorlage von vorgegebenen Bedingungen ab. Im Ausführungsbeispiel der Fig. 3 und 4 kann als Sensor beispielsweise ein an der Innenseite des Gehäuse 20 befestigter, nicht näher dargestellter, Hallsensor vorgesehen sein, mit dem eine Position eines ebenfalls nicht dargestellten Magneten detektiert wird, der grundsätzlich am Fangexzenter 45 oder am Spannexzenter 51 befestigt sein kann. Der Fangexzenter 45 erreicht bei Verriegelungsbewegungen der Klinke 31 ohne ein Erfassen des Bolzens B durch die Klinke 31 eine andere Endposition als bei einer ordnungsgemäßen Verriegelung zwischen der Klinke 31 und dem Bolzen B. Dieser Unterschied in der möglichen Endposition des Fangexzenters 45 kann somit als Grundlage für die sensorisch ermittelte Information dienen, ob die Lehne 2 an der Fahrzeugstruktur 4 verriegelt ist oder nicht. Der Hallsensor erzeugt somit diesen Informationen entsprechende Signale, die über Leitungen 61 der in Fig. 5 gezeigten Steuerung 62 zugeführt werden. In einer möglichen Weiterbildung der gezeigten erfindungsgemäßen Ausführungsform kann auch die Position des Spannexzenters 51 sensorisch detektiert werden. Diese Positionsinformation geht jedoch nicht in die von einer Steuerung 62 zur Ansteuerung der Aktuatoreinrichtung 50 berücksichtigten Informationen ein, sie kann aber zur Feststellung einer Fehlverriegelung (Misuse) genutzt werden, d.h. einer Verriegelung der Klinke 31 ohne dass der Bolzen B erfasst ist.

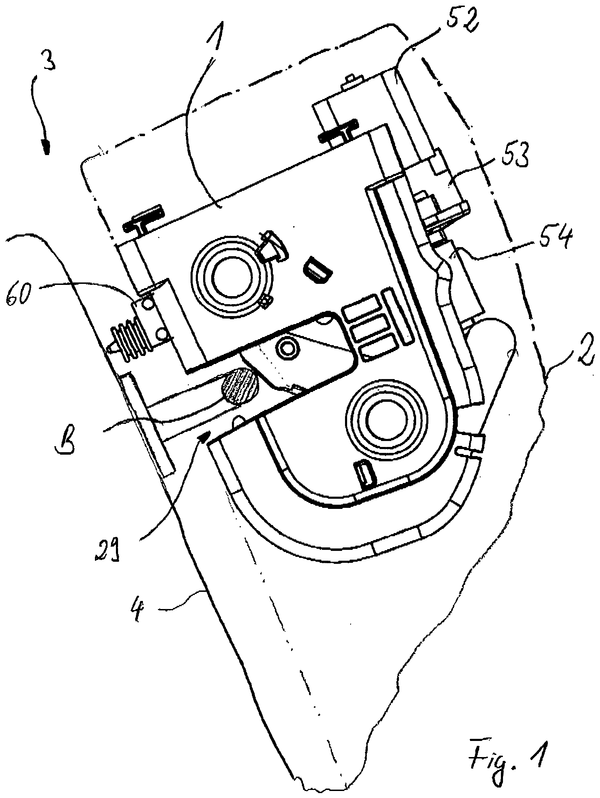

Die Bewegung der Aktuatoreinrichtung 50 wird durch das Erreichen der Lehne 2 aus einer abgeklappten Position in ihrer aufrechten Endposition als Verriegelungsposition ausgelöst, wie sie in Fig. 1 dargestellt ist. Im Ausführungsbeispiel ist ein vorzugsweise an der Verriegelungsvorrichtung 1 außen angebrachter Mikroschalter 60 vorgesehen, der mittels Leitungen 63 mit der Steuerung 62 verbunden ist. Bei Erreichen der verriegelbaren Position wird der Mikroschalter 60 aufgrund seines Kontakts mit der Fahrzeugstruktur 4 ausgelöst, wodurch ein Signal des Mikroschalters 60 zur Signalisierung des Erreichens der verriegelbaren Position der Lehne der in Fig. 5 gezeigten Steuerung 62 zugeführt wird. Dies löst ein Einschalten des Motors 52 durch die Steuerung 62 aus, dessen Antriebsbewegung mittels des Mitnehmers 58, wie bereits erörtert, die Klinke 31 verschwenkt. Der Steuerung 62 wird ebenfalls das Signal des Hallsensors zugeführt und damit der Motor 52 bei vollzogener Verriegelung ausgeschaltet. Anders als in Fig. 5 dargestellt, kann die Steuerung 62 des Motors 52 auch in die Verriegelungsvorrichtung 1 integriert sein. Die Steuerung 62 ist an eine Spannungsversorgung 64 angeschlossen und bestimmt aufgrund der ihr zugeführten Sensorsignale das Ein- und Ausschalten des Motors 52. Gegebenenfalls kann die Steuerung auch weitere Funktionen übernehmen, wie beispielsweise eine Spannungs-/Stromüberwachung, die bei einer Überlast den Motor unabhängig von Signalen der Sensoren zur Positionsbestimmung abschaltet.

Der Kraftfluss an der verriegelten Komponente verläuft vom Gegenelement B über die Klinke 31 hin zum Spannexzenter 51, so dass die Aktuatoreinrichtung 50 keine Lasten wie z.B. Crashlasten tragen muss.

Bei dieser Ausführungsform wird nach erfolgter Verriegelung der Anschlag 58 wieder zurückgestellt, so dass er die in Fig. 3 gezeigte Ausgangsposition wieder einnimmt, die Klinke 31 jedoch weiterhin in der in Fig. 4 dargestellten Position angeordnet ist. Das Spindelgetriebe 54 kann auch so ausgelegt sein, dass es mit der sich öffnenden Klinke 31 passiv mitgenommen wird und auf diese Weise eine Rückstellung erfolgt. Alternativ kann, wie es im Ausführungsbeispiel der Fall ist, nach dem Abschalten des Motors 52 eine nicht näher dargestellte Feder (z.B. Spiralfeder) derart auf die Aktuatoreinrichtung 50 (Motor, Getriebe und/oder Spindel) wirken, dass hierdurch der Anschlag 58 aktiv wieder in seine Ausgangsstellung zurückgezogen wird. Damit werden bei der Entriegelung keine zusätzlichen Kräfte zur Überwindung von Rückhaltekräften der Aktuatoreinrichtung 50 erforderlich und der Entriegelungsvorgang kann schnell und mit geringerem Kraftaufwand erfolgen. Die Feder kann hierzu beispielsweise zwischen dem Planetengetriebe 53 und dem Spindelgetriebe 54 angeordnet sein und durch die motorisch angetriebene Verriegelungsbewegung gespannt werden. Sobald der Motor 52 der Aktuatoreinrichtung 50 abgeschaltet wird, kann sich die Feder entspannen. Da der Motor 52 nun nicht mehr eine gegen eine Entspannung der Feder gerichtete Kraft erzeugt und das von der Feder auf das Spindelgetriebe 54 eingebrachte Drehmoment das Rückstelldrehmoment der Aktuatoreinrichtung 50 übersteigt, entspannt sich nun die Feder, was zu einer Bewegung des Anschlags in seine Ausgangsposition wie in Fig. 3 gezeigt, führt. Die Feder dreht somit das Spindelgetriebe 54 und das Planetengetriebe 53 in ihre Positionen zurück, die sie vor Erzeugung der Verriegelung eingenommen hatten.

In anderen Ausführungsformen kann eine Rückstellung der Aktuatoreinrichtung 50 auch durch eine Bewegung des Motors 52 erfolgen, dessen Antriebswelle hierzu im Vergleich zur Antriebsbewegung für die Erzeugung der Verriegelung in entgegengesetzter Richtung dreht.

Bei einer Verriegelungsvorrichtung, welche nicht die vorliegende Erfindung betrifft, kann die Aktuatoreinrichtung 50 die Rotationsbewegung eines Elektromotors als solche und ohne Transformation in eine geradlinige Bewegung zur Einwirkung auf die Klinke 31 bei deren Verschlussbewegung nutzen. Der Motor kann in diesem Fall derart an die Klinke 31 gekoppelt sein, dass seine Drehbewegung direkt oder über ein Getriebe, das ausgangsseitig ebenfalls eine Drehbewegung zur Verfügung stellt, an die Klinke 31 übertragen wird. Es kann beispielsweise vorgesehen sein, dass der Motor am Lagerbolzen 33 angeordnet und seine Drehbewegung als solche auf die Klinke 31 übertragen wird. Insbesondere im Zusammenhang mit derartigen Lösungen können Elektromotoren mit besonders flacher Bauform von Vorteil sein, wie dies beispielsweise bei elektronisch kommutierten Motoren (ECM) der Fall ist.

### Bezugszeichenliste

- 1: Verriegelungsvorrichtung
- 2: Lehne
- 3: Rücksitzanlage
- 4: Fahrzeugstruktur
- 20: Gehäuse
- 23: Verriegelungsmechanismus
- 24: Aktuatoreinheit
- 25: Bediengriff
- 29: Aufnahme
- 31: Klinke
- 33: erster Lagerbolzen
- 35: Hakenmaul
- 43: zweiter Lagerbolzen
- 45: Fangexzenter
- 45a: Entriegelungshebel
- 46: Schließfortsatz
- 49: Fangfläche
- 50: Aktuatoreinrichtung
- 51: Spannexzenter
- 51a: Entriegelungshebel
- 52: Gleichstrommotor
- 53: Planetengetriebe
- 54: Spindelgetriebe
- 55: Pfeil
- 58: Anschlag
- 59: Mitnehmer
- 60: Mikroschalter
- 61: Leitung
- 62: Steuerung
- 63: Leitung
- 64: Spannungsversorgung
- B: Gegenelement

## Patentansprüche

1. Verriegelungsvorrichtung (1) für einen Fahrzeugsitz, insbesondere für einen Kraftfahrzeugsitz, mit einem Verriegelungsmechanismus (23) zum mechanischen Verriegeln einer beweglichen Klinke (31) des Verriegelungsmechanismus (23) mit einem Gegenelement (B), sowie mit einer Aktuatoreinrichtung (50) zur Betätigung der Klinke (31) mittels eines Antriebs, mit einem Gehäuse (20) in dem der Verriegelungsmechanismus (23) angeordnet und gelagert ist, wobei motorisch angetriebene Mittel zur Erzeugung einer Verriegelung des Verriegelungsmechanismus (23) vorgesehen sind, und mit einem Kraftfluss am verriegelten Verriegelungsmechanismus (23) bei einer über das Gegenelement (B) eingeleiteten Belastung, bei dem die Aktuatoreinrichtung (50) außerhalb des Kraftflusses liegt,
**gekennzeichnet durch**
einen von der Aktuatoreinrichtung (50) mittels einer Hubbewegung antreibbaren und auf den Verriegelungsmechanismus (23) wirkenden Anschlag (58), der zu einer Schließbewegung der Klinke (31) führt, wobei der Anschlag (58) eine zumindest im Wesentlichen geradlinige Hubbewegung ausführt und hierbei einen mit der Klinke (31) wirkverbundenen Mitnehmer (59) mitnimmt und der Mitnehmer (59) hierdurch die Klinke (31) in eine Drehbewegung versetzt.

2. Verriegelungsvorrichtung (1) nach Anspruch 1, **gekennzeichnet durch** zumindest ein Sicherungselement zur Sicherung einer verriegelten Position der Klinke (31) gegen ein Öffnen, insbesondere durch ein als Fang- und/oder Spannexzenter (45, 51) ausgebildetes Sicherungselement.

3. Verriegelungsvorrichtung (1) nach zumindest einem der vorhergehenden Ansprüche, **gekennzeichnet durch** eine weitere Aktuatoreinrichtung zur Entriegelung der Verriegelungsvorrichtung.

4. Verriegelungsvorrichtung (1) nach zumindest einem der vorhergehenden Ansprüche, **gekennzeichnet, durch** ein Getriebe der Aktuatoreinrichtung (50), insbesondere ein Spindelgetriebe (54) und/oder ein Planetengetriebe (53).

5. Verriegelungsvorrichtung (1) nach zumindest einem der vorhergehenden Ansprüche, **gekennzeichnet durch** ein Rückstellelement zur Rückstellung der Aktuatoreinrichtung (50) in eine Ausgangsposition nach einer erfolgten Verriegelung der Klinke (31), wobei das Rückstellelement insbesondere in einem Getriebe der Aktuatoreinrichtung (50) angeordnet ist.

6. Verriegelungsvorrichtung (1) nach Anspruch 5, **dadurch gekennzeichnet, dass** das Rückstellelement als Energiespeicher ausgebildet ist, der durch eine Antriebsbewegung der Aktuatoreinrichtung (50) aufladbar ist.

7. Verriegelungsvorrichtung (1) nach zumindest einem der vorhergehenden Ansprüche, **gekennzeichnet durch** eine Sensoreinrichtung, die mit Mitteln zur Detektierung von positionsabhängigen Lagen versehen ist, wobei die Verriegelungsvorrichtung (1) Mittel aufweist, mit denen von der Sensoreinrichtung generierte positionsabhängige Signale zur Betätigung der Aktuatoreinrichtung (50) nutzbar sind.

8. Verriegelungsvorrichtung (1) nach Anspruch 7, **dadurch gekennzeichnet, dass** die Sensoreinrichtung mit Mitteln versehen ist, durch die in Abhängigkeit von zumindest einer Position von Bestandteilen des Verriegelungsmechanismus (23) und/oder einer Lehne (2) des Fahrzeugsitzes Signale erzeugbar sind.

9. Verriegelungsvorrichtung (1) nach Anspruch 7 oder 8, **dadurch gekennzeichnet, dass** bei Erreichen einer bestimmten Lehnenposition von der Sensoreinrichtung ein Signal erfolgt, durch das eine Betätigung der Aktuatoreinrichtung (50) zur Durchführung einer Verriegelung ausgelöst wird.

10. Verriegelungsvorrichtung (1) nach zumindest einem der Ansprüche 7 bis 9, **gekennzeichnet durch** Detektionsmittel der Sensoreinrichtung zur Detektierung einer Verriegelungsendlage der Klinke (31).

## Claims

1. Locking device (1) for a vehicle seat, in particular for a motor vehicle seat, with a locking mechanism (23) for mechanically locking a movable pawl (31) of the locking mechanism (23) to a counter element (B), and with an actuator device (50) for actuating the pawl (31) by means of a drive, with a housing (20) in which the locking mechanism (23) is arranged and mounted, wherein motor-driven means are provided for locking the locking mechanism (23), and with a force flow at the locked locking mechanism (23) in the event of a loading introduced via the counter element (B), during which the actuator device (50) lies outside the force flow,
**characterized by**
a stop (58) which is drivable by the actuator device (50) by means of a lifting movement and acts on the locking mechanism (23) and leads to a closing movement of the pawl (31), wherein the stop (58) carries out an at least substantially rectilinear lifting movement and, in the process, carries along a driver (59) that is operatively connected to the pawl (31), and the driver (59) thereby sets the pawl (31) into a rotational movement.

2. Locking device (1) according to Claim 1, **characterized by** at least one securing element for securing a locked position of the pawl (31) against opening, in particular by means of a securing element in the form of a catching and/or clamping eccentric (45, 51).

3. Locking device (1) according to at least one of the preceding claims, **characterized by** a further actuator device for unlocking the locking device.

4. Locking device (1) according to at least one of the preceding claims, **characterized by** a gearing of the actuator device (50), in particular a spindle gearing (54) and/or a planetary gearing (53).

5. Locking device (1) according to at least one of the preceding claims, **characterized by** a resetting element for resetting the actuator device (50) into a starting position once the pawl (31) has been locked, wherein the resetting element is arranged in particular in a gearing of the actuator device (50).

6. Locking device (1) according to Claim 5, **characterized in that** the resetting element is in the form of an energy store which is chargeable by a driving movement of the actuator device (50).

7. Locking device (1) according to at least one of the preceding claims, **characterized by** a sensor device which is provided with means for detecting position-dependent positions, wherein the locking device (1) has means with which position-dependent signals generated by the sensor device are usable for actuating the actuator device (50).

8. Locking device (1) according to Claim 7, **characterized in that** the sensor device is provided with means through which signals can be generated depending on at least one position of components of the locking mechanism (23) and/or of a backrest (2) of the vehicle seat.

9. Locking device (1) according to Claim 7 or 8, **characterized in that**, when a certain backrest position is reached, the sensor device issues a signal by means of which actuation of the actuator device (50) for implementing locking is triggered.

10. Locking device (1) according to at least one of Claims 7 to 9, **characterized by** detection means of the sensor device for detecting a final locking position of the pawl (31).

## Revendications

1. Dispositif de verrouillage (1) pour un siège de véhicule, notamment pour un siège de véhicule à moteur, muni d'un mécanisme de verrouillage (23) pour le verrouillage mécanique d'un cliquet mobile (31) du mécanisme de verrouillage (23) avec un contre-élément (B), ainsi que muni d'un appareil actionneur (50) pour l'actionnement du cliquet (31) au moyen d'un entraînement, muni d'un boîtier (20) dans lequel le mécanisme de verrouillage (23) est agencé et monté, des moyens entraînés par moteur pour la génération d'un verrouillage du mécanisme de verrouillage (23) étant prévus, et muni d'un flux de forces sur le mécanisme de verrouillage verrouillé (23) en présence d'une charge introduite par l'intermédiaire du contre-élément (B), selon lequel l'appareil actionneur (50) est situé en dehors du flux de forces,
**caractérisé par**
une butée (58) entraînable par l'appareil actionneur (50) au moyen d'un mouvement de course et agissant sur le mécanisme de verrouillage (23), qui conduit à un mouvement de fermeture du cliquet (31), la butée (58) réalisant un mouvement de course au moins essentiellement rectiligne et emmenant ainsi un entraîneur (59) relié fonctionnellement avec le cliquet (31) et l'entraîneur (59) mettant de ce fait le cliquet (31) en mouvement de rotation.

2. Dispositif de verrouillage (1) selon la revendication 1, **caractérisé par** au moins un élément de sécurisation pour la sécurisation d'une position verrouillée du cliquet (31) contre une ouverture, notamment par un élément de sécurisation configuré en tant qu'excentrique d'accrochage et/ou de serrage (45, 51) .

3. Dispositif de verrouillage (1) selon au moins l'une quelconque des revendications précédentes, **caractérisé par** un appareil actionneur supplémentaire pour le déverrouillage du dispositif de verrouillage.

4. Dispositif de verrouillage (1) selon au moins l'une quelconque des revendications précédentes, **caractérisé par** un engrenage de l'appareil actionneur (50), notamment un engrenage à broche (54) et/ou un engrenage planétaire (53).

5. Dispositif de verrouillage (1) selon au moins l'une quelconque des revendications précédentes, **caractérisé par** un élément de réinitialisation pour la réinitialisation de l'appareil actionneur (50) dans une position de départ après un verrouillage terminé du cliquet (31), l'élément de réinitialisation étant notamment agencé dans un engrenage de l'appareil actionneur (50).

6. Dispositif de verrouillage (1) selon la revendication 5, **caractérisé en ce que** l'élément de réinitialisation est configuré en tant qu'accumulateur d'énergie, qui est rechargeable par un mouvement d'entraînement de l'appareil actionneur (50).

7. Dispositif de verrouillage (1) selon au moins l'une quelconque des revendications précédentes, **caractérisé par** un appareil capteur, qui est muni de moyens pour la détection d'emplacements dépendants de la position, le dispositif de verrouillage (1) comprenant des moyens avec lesquels des signaux dépendants de la position générés par l'appareil capteur peuvent être utilisés pour l'actionnement de l'appareil actionneur (50).

8. Dispositif de verrouillage (1) selon la revendication 7, **caractérisé en ce que** l'appareil capteur est muni de moyens par lesquels des signaux peuvent être générés en fonction d'au moins une position de constituants du mécanisme de verrouillage (23) et/ou d'un dossier (2) du siège de véhicule.

9. Dispositif de verrouillage (1) selon la revendication 7 ou 8, **caractérisé en ce que**, lorsqu'une position de dossier déterminée est atteinte par l'appareil capteur, un signal a lieu, par lequel un actionnement de l'appareil actionneur (50) pour la réalisation d'un verrouillage est déclenché.

10. Dispositif de verrouillage (1) selon au moins l'une quelconque des revendications 7 à 9, **caractérisé par** des moyens de détection de l'appareil capteur pour la détection d'un emplacement final verrouillé du cliquet (31).
